# EUROPEAN PATENT SPECIFICATION

(11) **EP 2 991 209 B1**
(45) Date of publication and mention of the grant of the patent: **19.09.2018**
(21) Application number: 15178970.8
(22) Date of filing: 29.07.2015
(51) Int. Cl.: H02M 1/36, H02M 7/519, H02M 7/538, H02J 3/38, H02M 1/32, H02M 7/48, H02S 40/32

(54) **METHOD FOR CONTROLLING SHUTDOWN OF PHOTOVOLTAIC INVERTERS, SYSTEM THEREOF, AND PHOTOVOLTAIC POWER GENERATION SYSTEM**
VERFAHREN ZUR STEUERUNG DER ABSCHALTUNG VON FOTOVOLTAISCHEN WECHSELRICHTERN, SYSTEM DAFÜR UND FOTOVOLTAISCHES STROMERZEUGUNGSSYSTEM
PROCÉDÉ POUR COMMANDER L'ARRÊT D'ONDULEURS PHOTOVOLTAÏQUES, SYSTÈME ASSOCIÉ ET SYSTÈME DE GÉNÉRATION D'ÉNERGIE PHOTOVOLTAÏQUE

(30) Priority: 27.08.2014 CN 201410427767
(43) Date of publication of application: 02.03.2016
(73) Proprietor: Sungrow Power Supply Co., Ltd., Hefei, Anhui 230088 (CN)
(72) Inventor: LI, Xiaoxun, 230088 Hefei (CN); HAN, Zhiqiang, 230088 Hefei (CN); LI, Haoyuan, 230088 Hefei (CN); MEI, Xiaodong, 230088 Hefei (CN); WU, Touming, 230088 Hefei (CN); HE, Chao, 230088 Hefei (CN); SONG, Yang, 230088 Hefei (CN)
(74) Representative: Tappe, Udo

(56) References cited:
- EP-A2- 1 848 085
- DE-A1-102012 104 005

## Description

### TECHNICAL FIELD

The disclosure relates to the field of photovoltaic power generation, and in particular to a method for controlling shutdown of photovoltaic inverters, a system thereof, and a photovoltaic power generation system.

### BACKGROUND

As a main renewable technology, photovoltaic power generation technology is widely used in many countries and regions. In photovoltaic power generation technology, a photovoltaic panel is used to absorb solar energy and convert the solar energy into direct current, and through maximum power tracking by the photovoltaic inverter, the maximum direct current outputted by the photovoltaic panel is converted into alternating current for the use of loads.

The photovoltaic power generation technology is directly related to sunray. With the gradual enhancement of solar irradiance in the morning, the voltage outputted by a photovoltaic array rises. The photovoltaic inverter begins grid-connected operation when the voltage reaches a startup voltage needed for the photovoltaic inverter to operate. With the gradual weakening of solar irradiance at sunset, open-circuit voltage and energy of the photovoltaic panel gradually decrease, and at the moment, the power outputted by the photovoltaic inverter gradually reduces. In a case that the power outputted by the photovoltaic inverter is lower than a predetermined threshold, the photovoltaic inverter tries to shut down, disconnecting a grid-side relay.

At present, there are mainly two methods for controlling shutdown of photovoltaic inverters. One method includes determining whether to shut down the photovoltaic inverter based on input power or output power of the photovoltaic inverter. That is, a PWM pulse is blocked, a grid-connected relay is disconnected, and the photovoltaic inverter becomes in a standby state, in a case that the power is less than a predetermined threshold. However, using this method, the problem of frequently disconnecting and closing of the relay on a cloudy day occurs, which greatly affects the service life of the grid-connected relay.

Another method for controlling shutdown of photovoltaic inverters includes determining whether to shut down the photovoltaic inverter based on input voltage of the photovoltaic panel. That is, a PWM pulse is blocked, a grid-connected relay is disconnected, and the photovoltaic inverter becomes in a standby state, in a case that the input voltage is less than a predetermined threshold. If the predetermined threshold is too large, the problem of frequent operations of the grid-connected relay also occurs, which affects the service life of the grid-connected relay.

D1 (DE 102012104005A1) discloses a method for operating a photovoltaic system for feeding a medium-voltage grid, and the photovoltaic system has a photovoltaic generator including a plurality of photovoltaic modules, at least one inverter and at least one medium-voltage transformer. The medium-voltage transformer is connected on the primary side directly to a low-voltage AC output of the inverter, the inverter is connected to the photovoltaic generator via a DC input, and the inverter permits reverse currents from the low-voltage AC output to the DC input. The method is characterized by the fact that in the event that there is insufficient generation of electric power for the feed by the photovoltaic modules, the inverter remains connected on the AC side to the medium-voltage grid via the medium-voltage transformer, and remains connected on the DC side to the photovoltaic generator.

### SUMMARY

In view of this, a method for controlling shutdown of a photovoltaic inverter, a system thereof, and a photovoltaic power generation system are provided in the disclosure, to solve the problem of service life affected by frequent operations of the grid-connected relay when determining whether to shut down the photovoltaic inverter based on the power or voltage. The solution is as follows.

A method for controlling shutdown of a photovoltaic inverter, includes:
obtaining an input current of a direct current side of the photovoltaic inverter when a grid-connected relay is closed;
determining a first average input current, where the first average input current is determined by calculating an average value of the input current of the direct current side of the photovoltaic inverter which is obtained through sampling at a first time, and by the first time, a period over which the voltage of the direct current side of the photovoltaic panel is greater than a preset voltage startup threshold is greater than a second predetermined duration;
comparing the input current of the direct current side obtained in real time when the photovoltaic inverter operates normally to the first average input current, wherein the photovoltaic inverter begins operating normally when the grid-connected relay is closed and a pulse-width modulation pulse is turned on; and
disconnecting the grid-connected relay to stop the grid-connected operation of the photovoltaic inverter, if it is determined that a duration reaches a first predetermined duration, where in the duration, the input current of the direct current side obtained in real time when the photovoltaic inverter operates normally is less than or equal to the first average input current.

Further, obtaining the input current of the direct current side of the photovoltaic inverter when the grid-connected relay is closed, includes:
obtaining the input current of the direct current side of the photovoltaic inverter in a first sampling condition, wherein the first sampling condition is a condition in which a voltage of the direct current side of the photovoltaic panel is greater than a preset voltage startup threshold, the grid-connected operation of the photovoltaic inverter has not begun, the pulse-width modulation pulse is blocked, and the grid-connected relay is closed;
or, obtaining the input current of the direct current side of the photovoltaic inverter in a second sampling condition, where the second sampling condition is a condition in which the pulse-width modulation pulse is blocked, the grid-connected relay is in a closed state and the photovoltaic inverter is performing the grid-connected operation.

Further, determining the first average input current includes:
in the first sampling condition, acquiring the input current of the direct current side of the photovoltaic inverter, and calculating the average value of the input current of the direct current side of the photovoltaic inverter which is obtained through sampling at a first time, by the first time the period over which the voltage of the direct current side of the photovoltaic panel is greater than the preset voltage startup threshold is greater than a second predetermined duration;
or, in the second sampling condition, acquiring the input current of the direct current side of the photovoltaic inverter, and calculating the average value of the input current of the direct current side of the photovoltaic inverter which is obtained through sampling at a first time, by the first time the period over which the voltage of the direct current side of the photovoltaic panel is greater than the preset voltage startup threshold is greater than the second predetermined duration.

Further, the method includes: stopping timing of the input current of the direct current side of the photovoltaic inverter, in a case that the duration in which the input current of the direct current side of the photovoltaic inverter is less than or equal to the first average input current is not larger than the first predetermined duration and it is determined that the input current of the direct current side of the photovoltaic inverter is greater than the first average input current.

A system for controlling shutdown of a photovoltaic inverter, includes: an obtaining unit, a current-determining unit connected to the obtaining unit, a comparing unit connected to both the obtaining unit and the current-determining unit, and a stop-controlling unit connected to the comparing unit, where
the obtaining unit is configured to obtain input current of a direct current side of the photovoltaic inverter when a grid-connected relay is closed, and obtain real-time input current of the direct current side of the photovoltaic inverter after the grid-connected relay is closed;
the current-determining unit is configure to determine a first average input current, wherein the first average input current is determined by calculating an average value of the input current of the direct current side of the photovoltaic inverter which is obtained through sampling at a first time, and by the first time, the period over which the voltage of the direct current side of the photovoltaic panel is greater than a preset voltage startup threshold is greater than a second predetermined duration;
the comparing unit is configure to compare the input current of the direct current side obtained in real time by the current-determining unit when the photovoltaic inverter operates normally to the first average input current, wherein the photovoltaic inverter begins operating normally when the grid-connected relay is closed, and a pulse-width modulation pulse is turned on; and
the stop-controlling unit is configure to, disconnect the grid-connected relay to stop the grid-connected operation of the photovoltaic inverter, if the comparing unit determines that the input current of the direct current side obtained in real time when the photovoltaic inverter operates normally is less than or equal to the first average input current, and an duration reaches a first predetermined duration, wherein in the duration, the input current of the direct current side obtained in real time after the grid-connected relay is closed is less than or equal to the first average input current.

Further, the obtaining unit is configured to obtain the input current of the direct current side of the photovoltaic inverter in a first sampling condition, wherein the first sampling condition is a condition in which a voltage of the direct current side of the photovoltaic panel is greater than a preset voltage startup threshold, the grid-connected operation of the photovoltaic inverter has not begun, the pulse-width modulation pulse is blocked, and the grid-connected relay is closed;
or, obtaining the input current of the direct current side of the photovoltaic inverter in a second sampling condition, where the second sampling condition is a condition in which the pulse-width modulation pulse is blocked, the grid-connected relay is in a closed state and the photovoltaic inverter is performing the grid-connected operation.

Further, the current-determining unit is configured to, in the first sampling condition, calculate the average value of the input current of the direct current side of the photovoltaic inverter which is obtained through sampling at a first time, by the first time the period over which the voltage of the direct current side of the photovoltaic panel is greater than the preset voltage startup threshold is greater than a second predetermined duration;
or, the current-determining unit is configured to, in the second sampling condition, calculate the average value of the input current of the direct current side of the photovoltaic inverter which is obtained through sampling at a first time, by the first time the period over which the voltage of the direct current side of the photovoltaic panel is greater than the preset voltage startup threshold is greater than the second predetermined duration.

Further, the system further includes a timing-controlling unit connected to the comparing unit,
where timing-controlling unit is configured to stop timing of the input current of the direct current side of the photovoltaic inverter, in a case that the comparing unit determines that the duration in which the input current of the direct current side of the photovoltaic inverter is less than or equal to the first average input current is not larger than the first predetermined duration, and the input current of the direct current side of the photovoltaic inverter is greater than the first average input current.

A photovoltaic power generation system, includes a photovoltaic panel, a controller, a photovoltaic inverter connected to both the photovoltaic panel and the controller, and a load connected to the photovoltaic inverter, where:
the photovoltaic panel is configured to absorb solar energy, convert the solar energy into direct current, and send the direct current to the photovoltaic inverter;
the controller is configured to control the startup and shutdown of the photovoltaic inverter and includes a system for controlling shutdown of a photovoltaic inverter mentioned above; and
the photovoltaic inverter is configured to convert the direct current from the photovoltaic panel into alternating current for the use of the load through maximum power tracking.

Further, the controller further includes a timing-controlling unit connected to the comparing unit,
and the timing-controlling unit is configured to, stop timing of the input current of the direct current side of the photovoltaic inverter, in a case that the comparing unit determines that the duration for which the input current of the direct current side of the photovoltaic inverter is less than or equal to the first average input current is not larger than the first predetermined duration and the input current of the direct current side of the photovoltaic inverter is greater than the first average input current.

As may be seen from the above solution, in the method for controlling shutdown of photovoltaic inverter, the system thereof, and the photovoltaic power generation system, the input current of the direct current side of the photovoltaic inverter is obtained when the grid-connected relay is closed, the first average input current is determined, and if the duration for which the input current of the direct current side is less than or equal to the first average input current reaches the first predetermined duration, the grid-connected relay is disconnected, to stop the grid-connected operation of the photovoltaic inverter. In the solution, by determining whether the duration for which the input current of the direct current side of the photovoltaic inverter is less than or equal to the first average input current reaches the first predetermined duration, it is determined whether to stop the grid-connected operation of the photovoltaic inverter. Thus, the duration of the grid-connected operation of the photovoltaic inverter reach a certain range, repeatedly disconnecting and closing the relay are avoided. The problem of the reduction of service life of the relay caused by repeatedly disconnecting and closing the relay in conventional technology is solved.

### BRIEF DESCRIPTION OF THE DRAWINGS

In order to illustrate the technical solutions according to the embodiments of the disclosure or in the conventional technology more clearly, the drawings to be used in the description of the embodiments or the conventional technology are described briefly hereinafter. Apparently, the drawings in the following description are only a part of rather than all of the embodiments of the disclosure, and other drawings may be obtained by those skilled in the art according to those drawings without creative effort.
Figure 1 is a flowchart of a method for controlling shutdown of a photovoltaic inverter according to an embodiment of the disclosure;
Figure 2 is a structural diagram of a system for controlling shutdown of a photovoltaic inverter according to an embodiment of the disclosure;
Figure 3 is a structural diagram of a photovoltaic power generation system according to an embodiment of the disclosure.

### DETAILED DESCRIPTION OF THE EMBODIMENTS

Hereinafter, the technical solutions according to the embodiments of the disclosure are described clearly and completely in conjunction with the drawings according to the embodiments of the disclosure. Apparently, the described embodiments are only a part of rather than all of the embodiments of the disclosure. All the other embodiments obtained by those skilled in the art based on the embodiments of the disclosure without creative effort fall within the protection scope of the disclosure.

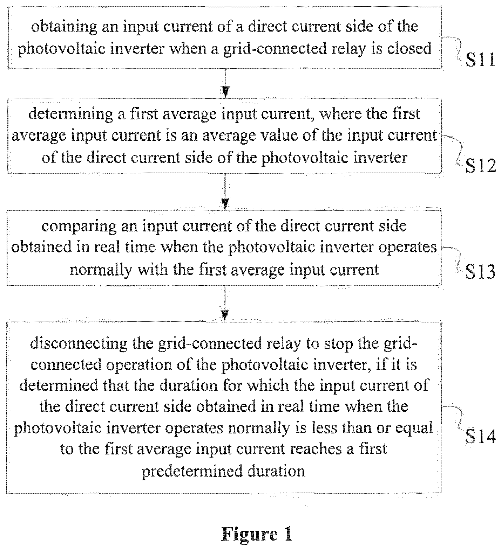

A method for controlling shutdown of a photovoltaic inverter is provided in the disclosure. Figure 1 is the flow chart of the method. The method includes steps S11-S14.

In step S11, an input current of a direct current side of the photovoltaic inverter is obtained when the grid-connected relay is closed.

The step that, the input current of the direct current side of the photovoltaic inverter is obtained when the grid-connected relay is closed, includes two situations.

The input current of the direct current side of the photovoltaic inverter in a first sampling condition is obtained. The first sampling condition refers to a condition in which a voltage of the direct current side of the photovoltaic panel is greater than a preset voltage startup threshold, a grid-connected operation of the photovoltaic inverter has not begun a PWM pulse is blocked, and a grid-connected relay is closed.

Before the grid-connected relay is closed, the photovoltaic inverter is in a standby state. The standby state is a state in which all PWM pulses are blocked, and the grid-connected relay is disconnected.

Or, the input current of the direct current side of the photovoltaic inverter in a second sampling condition is obtained. The second sampling condition refers to a condition in which a PWM pulse is blocked and the grid-connected relay is kept in a closed state and the photovoltaic inverter is performing the grid-connected operation.

In step S12, a first average input current is determined. The first average input current is an average value of the input current of the direct current side of the photovoltaic inverter.

The first average input current is determined by calculating the average value of the input current of the direct current side of the photovoltaic inverter which is obtained through sampling at first times. By the first time, the period over which the voltage of the direct current side of the photovoltaic panel is greater than the preset voltage startup threshold is greater than a second predetermined duration.

In step S13, input current of the direct current side obtained in real time when the photovoltaic inverter operates normally is compared with the first average input current.

When the photovoltaic inverter operates normally, the input current of the direct current side is obtained in real time, and the input current of the direct current side obtained is compared with the first average input current.

When the grid-connected relay is closed and the PWM pulse is turned on, the photovoltaic inverter begins operating normally.

In step S14, if it is determined that the duration for which the input current of the direct current side obtained in real time when the photovoltaic inverter operates normally is less than or equal to the first average input current reaches a first predetermined duration, the grid-connected relay is disconnected, to stop the grid-connected operation of the photovoltaic inverter.

The duration for which the input current of the direct current side of the photovoltaic inverter is less than or equal to the first average input current is a second duration. In a case that the second duration is equal to or greater than the first predetermined duration, the grid-connected operation of the photovoltaic inverter is stopped. At the moment, there is no energy in the photovoltaic panel or an input direct current switch is turned off. In a case that the second duration is less than the first predetermined duration, (i.e., the duration for which the input current of the direct current side of the photovoltaic inverter is less than or equal to the first average input current does not reach the first predetermined duration, in other words, the input current of the direct current side of the photovoltaic inverter is greater than the first average input current), the timing of the input current of the direct current side of the photovoltaic inverter is stopped, and the photovoltaic inverter continues the grid-connected operation.

According to the embodiment, the first average input current is used as the threshold for determining whether to shut down the photovoltaic inverter, and the current determining threshold is recorded and updated for every grid-connected operation. It may effectively avoid incorrect determination caused by a zero drift of current sampling, compared to the method of determining whether to shut down the photovoltaic inverter based on a fixed determining threshold.

The obtaining of the first average input current will be described below.

Under a condition that the voltage at the direct current side of the photovoltaic panel is greater than the preset voltage startup threshold, the grid-connected operation of the photovoltaic inverter has not begun, the PWM pulse is blocked, and the grid-connected relay is closed. At the moment, the input current of the direct current side of the photovoltaic inverter is obtained, and the average value of the input current of the direct current side of the photovoltaic inverter which is obtained through sampling at first times is calculated. By the first time, the period over which the voltage of the direct current side of the photovoltaic panel is greater than the preset voltage startup threshold is greater than a second predetermined duration.

Or, in the process of grid-connected operation of the photovoltaic inverter, the PWM pulse is blocked, and the grid-connected relay is kept in the closed state. At the moment, the input current of the direct current side of the photovoltaic inverter is obtained, and the average value of the input current of the direct current side of the photovoltaic inverter which is obtained through sampling at first times is calculated. By the first time, the period over which the voltage of the direct current side of the photovoltaic panel is greater than the preset voltage startup threshold is greater than a second predetermined duration.

The solution disclosed in the embodiment may be applied to a one channel MPPT system of a single-stage photovoltaic inverter, a one channel MPPT system of a two-stage photovoltaic inverter, a two channel MPPT system of a two-stage photovoltaic inverter, a three channel MPPT system of a two-stage photovoltaic inverter, or a four channel MPPT system of a two-stage photovoltaic inverter. Not all the applications are described in detail herein.

In the method for controlling shutdown of photovoltaic inverters according to the embodiment of the disclosure, the input current of the direct current side of the photovoltaic inverter is obtained when the grid-connected relay is closed, the first average input current is determined, and if the duration for which the input current of the direct current side is less than or equal to the first average input current reaches the first predetermined duration, the grid-connected relay is disconnected, to stop the grid-connected operation of the photovoltaic inverter. In the solution, by determining whether the duration for which the input current of the direct current side of the photovoltaic inverter is less than or equal to the first average input current reaches the first predetermined duration, it is determined whether to stop the grid-connected operation of the photovoltaic inverter. Thus, the duration of the grid-connected operation of the photovoltaic inverter reach a certain time range, repeatedly disconnecting and closing the relay are avoided. The problem of the reduction of service life of the relay caused by repeatedly disconnecting and closing the relay in conventional technology is solved.

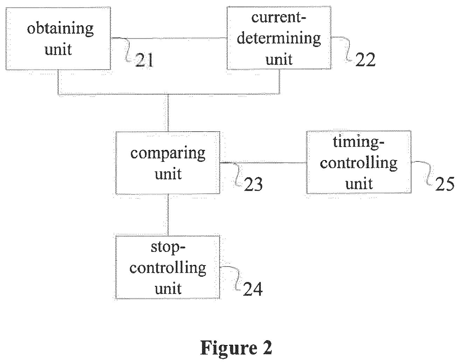

A system for controlling shutdown of a photovoltaic inverter is provided according to another embodiment. Figure 2 is the structural diagram of the system.

The system includes an obtaining unit 21, a current-determining unit 22 connected to the obtaining unit, a comparing unit 23 connected to the obtaining unit 21 and the current-determining unit 22 respectively, and a stop-controlling unit 24 connected to the comparing unit 23.

The obtaining unit 21 is configured to obtain input current of a direct current side of the photovoltaic inverter when a grid-connected relay is closed, and obtain real-time input current of the direct current side of the photovoltaic inverter after the grid-connected relay has been closed.

The case that, the obtaining unit 21 obtains the input current of the direct current side of the photovoltaic inverter when the grid-connected relay is closed, includes two situations.

The obtaining unit 21 obtains input current of the direct current side of the photovoltaic inverter in a first sampling condition, where the first sampling condition is a condition in which a voltage at the direct current side of the photovoltaic panel is greater than a preset voltage startup threshold, a grid-connected operation of the photovoltaic inverter has not begun, a PWM pulse is blocked, and a grid-connected relay is closed.

Before the grid-connected relay is closed, the photovoltaic inverter is in a standby state. The standby state is a state in which all PWM pulses are blocked, and the grid-connected relay is disconnected.

Or, the obtaining unit 21 obtains the input current at the direct current side of the photovoltaic inverter in a second sampling condition, where the second sampling condition is a condition in which a PWM pulse is blocked, a grid-connected relay is kept in a closed state and the photovoltaic inverter is performing the grid-connected operation.

The current-determining unit 22 is configure to determine a first average input current, where the first average input current is the average value of the input current at the direct current side of the photovoltaic inverter.

The current-determining unit 22 determines the first average input current as follows. The current-determining unit calculates, when a first sampling condition is met, the average value of the input current at the direct current side of the photovoltaic inverter which is obtained through sampling at first times. By the first time the period over which the voltage at the direct current side of the photovoltaic panel is greater than the preset voltage startup threshold is greater than a second predetermined duration.

Or, the current-determining unit is configure to calculate, when a second sampling condition is met, the average value of the input current at the direct current side of the photovoltaic inverter which is obtained through sampling at first times. By the first time the period over which the voltage at the direct current side of the photovoltaic panel is greater than the preset voltage startup threshold is greater than a second predetermined duration.

The comparing unit 23 is configure to compare the input current at the direct current side obtained in real time by the current-determining unit 22 when the photovoltaic inverter operates normally with the first average input current.

The stop-controlling unit 24 is configure to, if the comparing unit 23 determines that the input current at the direct current side obtained in real time when the photovoltaic inverter operates normally is less than or equal to the first average input current, and the duration for which the input current at the direct current side obtained in real time when the photovoltaic inverter operates normally is less than or equal to the first average input current reaches the first predetermined duration, disconnect the grid-connected relay, to stop a grid-connected operation of the photovoltaic inverter.

The duration for which the input current at the direct current side of the photovoltaic inverter is less than or equal to the first average input current is a second duration. In a case that the second duration is equal to or greater than the first predetermined duration, the grid-connected operation of the photovoltaic inverter is stopped. At the moment, there is no energy in the photovoltaic panel or an input direct current switch is turned off.

The system for controlling shutdown of photovoltaic inverter according to the embodiment may further include a timing-controlling unit 25 connected to the comparing unit 23.

In a case that the second duration is less than the first predetermined duration, (i.e., the duration for which the input current at the direct current side of the photovoltaic inverter is less than or equal to the first average input current does not reach the first predetermined duration, in other words, the input current at the direct current side of the photovoltaic inverter is greater than the first average input current), the timing-controlling unit 25 stops the timing of the input current at the direct current side of the photovoltaic inverter, and the photovoltaic inverter continues the grid-connected operation.

According to the embodiment, the first average input current is used as the threshold for determining whether to shut down the photovoltaic inverter, and the current determining threshold is recorded and updated for every grid-connected operation. It may effectively avoid incorrect determination caused by a zero drift of current sampling compared to the method of determining whether to shut down the photovoltaic inverter based on a fixed determining threshold.

The first average input current is obtained as follows.

Under a condition that the voltage at the direct current side of the photovoltaic panel is greater than the preset voltage startup threshold, the grid-connected operation of the photovoltaic inverter has not begun, the PWM pulse is blocked, and the grid-connected relay is closed. At the moment, the input current at the direct current side of the photovoltaic inverter is obtained, and the average value of the input current at the direct current side of the photovoltaic inverter which is obtained through sampling at first times is calculated. By the first time, the period over which the voltage at the direct current side of the photovoltaic panel is greater than the preset voltage startup threshold is greater than a second predetermined duration.

Or, in the process of grid-connected operation of the photovoltaic inverter, the PWM pulse is blocked, and the grid-connected relay is kept in the closed state. At the moment, the input current at the direct current side of the photovoltaic inverter is obtained, and the average value of the input current at the direct current side of the photovoltaic inverter which is obtained through sampling at first times is calculated. By the first time, the period over which the voltage at the direct current side of the photovoltaic panel is greater than the preset voltage startup threshold is greater than a second predetermined duration.

In the system for controlling shutdown of photovoltaic inverter according to the embodiment of the disclosure, the input current at the direct current side of the photovoltaic inverter is obtained when the grid-connected relay is closed, the first average input current is determined, and if the duration for which the input current at the direct current side is less than or equal to the first average input current reaches the first predetermined duration, the grid-connected relay is disconnected, to stop the grid-connected operation of the photovoltaic inverter. In the solution, by determining whether the duration for which the input current at the direct current side of the photovoltaic inverter is less than or equal to the first average input current reaches the first predetermined duration, it is determined whether to stop the grid-connected operation of the photovoltaic inverter. Thus the duration of the grid-connected operation of the photovoltaic inverter reach a certain time range, repeatedly disconnecting and closing the relay are avoided. The problem of the reduction of service life of the relay caused by repeatedly disconnecting and closing the relay in conventional technology is solved.

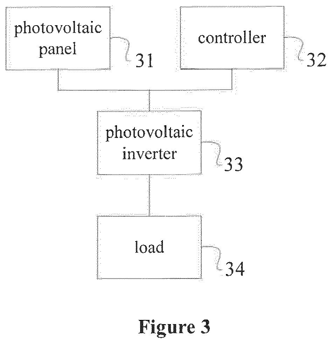

A photovoltaic power generation system is provided according to still another embodiment. Figure 3 is the structural diagram of the system.

The system includes a photovoltaic panel 31, a controller 32, a photovoltaic inverter 33 connected to the photovoltaic panel 31 and the controller 32 respectively, and a load 34 connected to the photovoltaic inverter 33.

The photovoltaic panel 31 is configured to absorb solar energy, convert the solar energy into direct current, and send the direct current to the photovoltaic inverter 33.

The controller is configured to control the startup and shutdown of the photovoltaic inverter 33.

The photovoltaic inverter 33 is configured to convert the direct current from the photovoltaic panel 31 into alternating current for the use of the load through maximum power tracking.

The load 34 may be an active load, or may be a passive load.

The controller includes an obtaining unit, a current-determining unit connected to the obtaining unit, a comparing unit connected to the obtaining unit and the current-determining unit respectively, and a stop-controlling unit connected to the comparing unit. Its structural is the same as that shown in Figure 2.

The obtaining unit is configured to obtain input current of a direct current side of the photovoltaic inverter when a grid-connected relay is closed, and obtain real-time input current of the direct current side of the photovoltaic inverter after the grid-connected relay has been closed.

The case that, the obtaining unit obtains the input current of the direct current side of the photovoltaic inverter when the grid-connected relay is closed, includes two situations.

The obtaining unit obtains input current of the direct current side of the photovoltaic inverter in a first sampling condition, where the first sampling condition is a condition in which a voltage at the direct current side of the photovoltaic panel is greater than a preset voltage startup threshold, a grid-connected operation of the photovoltaic inverter has not begun, a PWM pulse is blocked, and a grid-connected relay is closed.

Before the grid-connected relay is closed, the photovoltaic inverter is in a standby state. The standby state is a state in which that all PWM pulses are blocked, and the grid-connected relay is disconnected.

Or, the obtaining unit obtains the input current at the direct current side of the photovoltaic inverter in a second sampling condition, where the second sampling condition is a condition in which a PWM pulse is blocked, a grid-connected relay is kept in a closed state and the photovoltaic inverter is performing the grid-connected operation.

The current-determining unit is configure to determine a first average input current, where the average value of the input current at the direct current side of the photovoltaic inverter.

The current-determining unit determines the first average input current as follows. The current-determining unit calculates, when a first sampling condition is met, the average value of the input current at the direct current side of the photovoltaic inverter which is obtained through sampling at first times, By the first time the period over which the voltage at the direct current side of the photovoltaic panel is greater than the preset voltage startup threshold is greater than a second predetermined duration.

Or, the current-determining unit is configure to calculate, when a second sampling condition is met, the average value of the input current at the direct current side of the photovoltaic inverter which is obtained through sampling at first times. By the first time the period over which the voltage at the direct current side of the photovoltaic panel is greater than the preset voltage startup threshold is greater than a second predetermined duration.

The comparing unit is configure to compare the input current at the direct current side obtained in real time by the current-determining unit when the photovoltaic inverter operates normally with the first average input current.

The stop-controlling unit is configure to, if the comparing unit determines that the input current at the direct current side obtained in real time when the photovoltaic inverter operates normally is less than or equal to the first average input current, and the duration for which the input current at the direct current side obtained in real time when the photovoltaic inverter operates normally is less than or equal to the first average input current reaches the first predetermined duration, disconnect the grid-connected relay, to stop a grid-connected operation of the photovoltaic inverter.

The duration for which the input current at the direct current side of the photovoltaic inverter is less than or equal to the first average input current is a second duration. In a case that the second duration is equal to or greater than the first predetermined duration, the grid-connected operation of the photovoltaic inverter is stopped. At the moment, there is no energy in the photovoltaic panel or an input direct current switch is turned off.

The system for controlling shutdown of photovoltaic inverter according to the embodiment may further include a timing-controlling unit connected to the comparing unit.

In a case that the second duration is less than the first predetermined duration, (i.e., the duration for which the input current at the direct current side of the photovoltaic inverter is less than or equal to the first average input current does not reach the first predetermined duration, in other words, the input current at the direct current side of the photovoltaic inverter is greater than the first average input current), the timing-controlling unit stops the timing of the input current at the direct current side of the photovoltaic inverter, and the photovoltaic inverter continues the grid-connected operation.

According to the embodiment, the first average input current is used as the threshold for determining whether to shut down the photovoltaic inverter, and the current determining threshold is recorded and updated for every grid-connected operation. It may effectively avoid incorrect determination caused by a zero drift of current sampling compared to the method of determining whether to shut down the photovoltaic inverter based on a fixed determining threshold.

The first average input current is obtained as follows.

Under a condition that the voltage at the direct current side of the photovoltaic panel is greater than the preset voltage startup threshold, the grid-connected operation of the photovoltaic inverter has not begun, the PWM pulse is blocked, and the grid-connected relay is closed. At the moment, the input current at the direct current side of the photovoltaic inverter is obtained, and the average value of the input current at the direct current side of the photovoltaic inverter which is obtained through sampling at first times is calculated. By the first time, the period over which the voltage at the direct current side of the photovoltaic panel is greater than the preset voltage startup threshold is greater than a second predetermined duration.

Or, in the process of grid-connected operation of the photovoltaic inverter, the PWM pulse is blocked, and the grid-connected relay is kept in the closed state. At the moment, the input current at the direct current side of the photovoltaic inverter is obtained, and the average value of the input current at the direct current side of the photovoltaic inverter which is obtained through sampling at first times is calculated. By the first time, the period over which the voltage at the direct current side of the photovoltaic panel is greater than the preset voltage startup threshold is greater than a second predetermined duration.

The photovoltaic power generation system according to the embodiment of the disclosure includes the controller, and the controller obtains the input current at the direct current side of the photovoltaic inverter when the grid-connected relay is closed, and determines the first average input current. If the duration for which the input current at the direct current side is less than or equal to the first average input current reaches the first predetermined duration, the grid-connected relay is disconnected, to stop the grid-connected operation of the photovoltaic inverter. In the solution, by determining whether the duration for which the input current at the direct current side of the photovoltaic inverter is less than or equal to the first average input current reaches the first predetermined duration, it is determined whether to stop the grid-connected operation of the photovoltaic inverter. Thus the duration of the grid-connected operation of the photovoltaic inverter reach a certain time range, repeatedly disconnecting and closing the relay are avoided. The problem of the reduction of service life of the relay caused by repeatedly disconnecting and closing the relay in conventional technology is solved.

The embodiments of the disclosure are described in a progressive manner, each embodiment focuses on a difference from other embodiments, and for a same or similar part, the embodiments may refer to each other. For the apparatus according to the embodiments, it corresponds to the method according to the embodiments, thus description is brief, and for relevance, the method part may be referred to.

Those skilled in the art may further realize that, the units and algorithm steps in the examples according to the embodiments of the disclosure, may be implemented through electronic hardware, computer software or combination of the electronic hardware and computer software. To illustrate interchangeability of the hardware and software clearly, constitution and steps of the examples are generally described based on the function in the above description. Whether these functions are executed through hardware or software exactly, depends on a specific application and a design constraint of the technical solution. Those skilled in the art may use different methods to implement the described function for each specific application, and the implementation should not be considered to exceed the scope of the disclosure.

The units and algorithm steps in the examples according to the embodiments of the disclosure, may be implemented through hardware, software module executed by a processor, or combination of the hardware and the software module executed by the processor. The software module may be placed in random access memory (RAM), memory, read-only memory, electrically programmable ROM, electrically erasable programmable read-only memory, register, hard disk, removable disk, CD-ROM, or any other forms of storage medium known in the technology field.

The above description of the embodiments of the disclosure is to enable those skilled in the art to implement or use the invention. Various modifications made to the embodiments are apparent to those skilled in the art, and the general principles defined in the disclosure may be implemented in other embodiments without departing from the spirit and scope of the invention. Hence, the invention is not limited to the embodiments described in the disclosure, but conforms to a widest scope consistent with the principles and novel features in the disclosure.

## Claims

1. A method for controlling shutdown of a photovoltaic inverter, comprising:
obtaining an input current of a direct current side of the photovoltaic inverter when a grid-connected relay is closed (S11);
determining a first average input current (S12), wherein the first average input current is determined by calculating an average value of the input current of the direct current side of the photovoltaic inverter which is obtained through sampling at a first time, and by the first time, a period over which the voltage of the direct current side of the photovoltaic panel is greater than a preset voltage startup threshold is greater than a second predetermined duration;
comparing the input current of the direct current side obtained in real time when the photovoltaic inverter operates normally to the first average input current, wherein the photovoltaic inverter begins operating normally when the grid-connected relay is closed and a pulse-width modulation pulse is turned on (S13); and
disconnecting the grid-connected relay to stop the grid-connected operation of the photovoltaic inverter (S14), if it is determined that a duration reaches a first predetermined duration, wherein in the duration, the input current of the direct current side obtained in real time when the photovoltaic inverter operates normally is less than or equal to the first average input current.

2. The method according to claim 1, wherein obtaining the input current of the direct current side of the photovoltaic inverter when the grid-connected relay is closed (S11) comprises:
obtaining the input current of the direct current side of the photovoltaic inverter in a first sampling condition, wherein the first sampling condition is a condition in which a voltage of the direct current side of the photovoltaic panel is greater than a preset voltage startup threshold, the grid-connected operation of the photovoltaic inverter has not begun, the pulse-width modulation pulse is blocked, and the grid-connected relay is closed;
or, obtaining the input current of the direct current side of the photovoltaic inverter in a second sampling condition, where the second sampling condition is a condition in which the pulse-width modulation pulse is blocked, the grid-connected relay is in a closed state and the photovoltaic inverter is performing the grid-connected operation.

3. The method according to claim 2, wherein determining the first average input current comprises:
in the first sampling condition, acquiring the input current of the direct current side of the photovoltaic inverter, and calculating the average value of the input current of the direct current side of the photovoltaic inverter which is obtained through sampling at a first time, by the first time the period over which the voltage of the direct current side of the photovoltaic panel is greater than the preset voltage startup threshold is greater than a second predetermined duration;
or, in the second sampling condition, acquiring the input current of the direct current side of the photovoltaic inverter, and calculating the average value of the input current of the direct current side of the photovoltaic inverter which is obtained through sampling at a first time, by the first time the period over which the voltage of the direct current side of the photovoltaic panel is greater than the preset voltage startup threshold is greater than the second predetermined duration.

4. The method according to claim 1, further comprising:
stopping timing of the input current of the direct current side of the photovoltaic inverter, in a case that the duration in which the input current of the direct current side of the photovoltaic inverter is less than or equal to the first average input current is not larger than the first predetermined duration and it is determined that the input current of the direct current side of the photovoltaic inverter is greater than the first average input current.

5. A system for controlling shutdown of a photovoltaic inverter, comprising: an obtaining unit (21), a current-determining unit (22) connected to the obtaining unit (21), a comparing unit (23) connected to both the obtaining unit (21) and the current-determining unit (22), and a stop-controlling unit (24) connected to the comparing unit (23), wherein
the obtaining unit (21) is configured to obtain an input current of a direct current side of the photovoltaic inverter when a grid-connected relay is closed, and obtain a real-time input current of the direct current side of the photovoltaic inverter after the grid-connected relay is closed;
the current-determining unit (22) is configure to determine a first average input current, wherein the first average input current is determined by calculating an average value of the input current of the direct current side of the photovoltaic inverter which is obtained through sampling at a first time, and by the first time, the period over which the voltage of the direct current side of the photovoltaic panel is greater than a preset voltage startup threshold is greater than a second predetermined duration;
the comparing unit (23) is configure to compare the input current of the direct current side obtained in real time by the current-determining unit when the photovoltaic inverter operates normally to the first average input current, wherein the photovoltaic inverter begins operating normally when the grid-connected relay is closed, and a pulse-width modulation pulse is turned on; and
the stop-controlling unit (24) is configure to, disconnect the grid-connected relay to stop the grid-connected operation of the photovoltaic inverter, if the comparing unit determines that the input current of the direct current side obtained in real time when the photovoltaic inverter operates normally is less than or equal to the first average input current, and an duration reaches a first predetermined duration, wherein in the duration, the input current of the direct current side obtained in real time after the grid-connected relay is closed is less than or equal to the first average input current.

6. The system according to claim 5, wherein the obtaining unit (21) is configured to obtain the input current of the direct current side of the photovoltaic inverter in a first sampling condition, wherein the first sampling condition is a condition in which a voltage of the direct current side of the photovoltaic panel is greater than a preset voltage startup threshold, the grid-connected operation of the photovoltaic inverter has not begun, the pulse-width modulation pulse is blocked, and the grid-connected relay is closed;
or, obtaining the input current of the direct current side of the photovoltaic inverter in a second sampling condition, where the second sampling condition is a condition in which the pulse-width modulation pulse is blocked, the grid-connected relay is in a closed state and the photovoltaic inverter is performing the grid-connected operation.

7. The system according to claim 6, wherein the current-determining unit (22) is configured to, in the first sampling condition, calculate the average value of the input current of the direct current side of the photovoltaic inverter which is obtained through sampling at a first time, by the first time the period over which the voltage of the direct current side of the photovoltaic panel is greater than the preset voltage startup threshold is greater than a second predetermined duration;
or, the current-determining unit (22) is configured to, in the second sampling condition, calculate the average value of the input current of the direct current side of the photovoltaic inverter which is obtained through sampling at a first time, by the first time the period over which the voltage of the direct current side of the photovoltaic panel is greater than the preset voltage startup threshold is greater than the second predetermined duration.

8. The system according to claim 5, further comprising a timing-controlling unit (25) connected to the comparing unit (23),
wherein the timing-controlling unit (25) is configured to stop timing of the input current of the direct current side of the photovoltaic inverter, in a case that the comparing unit (23) determines that the duration in which the input current of the direct current side of the photovoltaic inverter is less than or equal to the first average input current is not larger than the first predetermined duration, and the input current of the direct current side of the photovoltaic inverter is greater than the first average input current.

9. A photovoltaic power generation system, comprising a photovoltaic panel (31), a controller (32), a photovoltaic inverter (33) connected to both the photovoltaic panel (31) and the controller (32), and a load (34) connected to the photovoltaic inverter (33), wherein:
the photovoltaic panel (31) is configured to absorb solar energy, convert the solar energy into direct current, and send the direct current to the photovoltaic inverter (33);
the controller (32) is configured to control startup and shutdown of the photovoltaic inverter (33) and comprises a system for controlling shutdown of a photovoltaic inverter according to claim 5; and
the photovoltaic inverter (33) is configured to convert the direct current from the photovoltaic panel (31) into alternating current for the use of the load through maximum power tracking.

10. The photovoltaic power generation system according to claim 9, wherein the controller further comprises a timing-controlling unit (25) connected to the comparing unit (23), and
wherein the timing-controlling unit (25) is configured to stop timing of the input current of the direct current side of the photovoltaic inverter (33), in a case that the comparing unit (23) determines that the duration for which the input current of the direct current side of the photovoltaic inverter (33) is less than or equal to the first average input current is not larger than the first predetermined duration and the input current of the direct current side of the photovoltaic inverter (33) is greater than the first average input current.

## Patentansprüche

1. Verfahren zum Steuern der Abschaltung eines photovoltaischen Wechselrichters, umfassend:
Erhalten eines Eingangsstroms einer Gleichstromseite des photovoltaischen Wechselrichters, wenn ein mit dem Netz verbundenes Relais geschlossen ist (S11);
Bestimmen eines ersten mittleren Eingangsstroms (S12), wobei der erste mittlere Eingangsstrom bestimmt wird, indem ein Durchschnittswert des Eingangsstroms der Gleichstromseite des photovoltaischen Wechselrichters berechnet wird, der durch Abtasten zu einem ersten Zeitpunkt erhalten wird,
wobei zu dem ersten Zeitpunkt eine Zeitdauer, über die die Spannung der Gleichstromseite des Photovoltaik-Panels größer als ein vorbestimmter Anfangsspannungsschwellenwert ist, größer als eine zweite vorbestimmte Dauer ist;
Vergleichen des Eingangsstroms der Gleichstromseite, der in Echtzeit erhalten wird, wenn der photovoltaische Wechselrichter normal mit dem ersten mittleren Eingangsstrom arbeitet, wobei der photovoltaische Wechselrichter normal zu arbeiten beginnt, wenn das mit dem Netz verbundene Relais geschlossen ist und ein Pulsbreitenmodulationsimpuls (S13) eingeschaltet ist; und
Trennen des mit dem Netz verbundenen Relais, um den am Netz angeschlossenen Betrieb des photovoltaischen Wechselrichters (S14) zu stoppen, wenn bestimmt wird, dass eine Dauer eine erste vorbestimmte Dauer erreicht, wobei in der Dauer der in Echtzeit erhaltene Eingangsstrom der Gleichstromseite, wenn der photovoltaische Wechselrichter normal arbeitet, kleiner oder gleich dem ersten mittleren Eingangsstrom ist.

2. Verfahren nach Anspruch 1, wobei das Erhalten des Eingangsstroms der Gleichstromseite des photovoltaischen Wechselrichters, wenn das mit dem Netz verbundene Relais (S11) geschlossen ist, umfasst:
Erhalten des Eingangsstroms der Gleichstromseite des photovoltaischen Wechselrichters unter einer ersten Abtastbedingung, wobei die erste Abtastbedingung eine Bedingung ist, bei der eine Spannung der Gleichstromseite des Photovoltaik-Panels größer als ein voreingestellter Anfangsspannungsschwellenwert ist, der ans Netz angeschlossene Betrieb des photovoltaischen Wechselrichters nicht begonnen hat, der Pulsbreitenmodulationsimpuls blockiert ist und das ans Netz angeschlossene Relais geschlossen ist;
oder, Erhalten des Eingangsstroms der Gleichstromseite des photovoltaischen Wechselrichters unter einer zweiten Abtastbedingung, wobei die zweite Abtastbedingung eine Bedingung ist, in welcher der Pulsbreitenmodulationsimpuls blockiert ist, das ans Netz angeschlossene Relais in einem geschlossenen Zustand ist und der photovoltaische Wechselrichter den ans Netz angeschlossenen Betrieb durchführt.

3. Verfahren nach Anspruch 2, wobei das Bestimmen des ersten mittleren Eingangsstroms umfasst:
unter der ersten Abtastbedingung, Erfassen des Eingangsstroms der Gleichstromseite des photovoltaischen Wechselrichters und Berechnen des Durchschnittswerts des Eingangsstroms der Gleichstromseite des photovoltaischen Wechselrichters, der durch Abtasten zu einem ersten Zeitpunkt erhalten wird, zu dem die Zeitdauer, über die die Spannung der Gleichstromseite des Photovoltaik-Panels größer als ein vorbestimmter Anfangsspannungsschwellenwert ist, größer als eine zweite vorbestimmte Dauer ist;
oder, unter der zweiten Abtastbedingung, Erfassen des Eingangsstroms der Gleichstromseite des photovoltaischen Wechselrichters und Berechnen des Durchschnittswerts des Eingangsstroms der Gleichstromseite des photovoltaischen Wechselrichters, der durch Abtasten zu einem ersten Zeitpunkt erhalten wird, zu dem die Zeitdauer, über die die Spannung der Gleichstromseite des Photovoltaik-Panels größer als ein vorbestimmter Anfangsspannungsschwellenwert ist, größer als die zweite vorbestimmte Dauer ist.

4. Verfahren nach Anspruch 1, ferner umfassend:
Stoppen der Zeitmessung des Eingangsstroms der Gleichstromseite des photovoltaischen Wechselrichters in einem Fall, in dem die Dauer, in welcher der Eingangsstrom der Gleichstromseite des photovoltaischen Wechselrichters kleiner oder gleich dem ersten mittleren Eingangsstrom ist, nicht größer als die erste vorbestimmte Dauer ist, und es bestimmt wird, dass der Eingangsstrom der Gleichstromseite des photovoltaischen Wechselrichters größer als der erste mittlere Eingangsstrom ist.

5. System zum Steuern der Abschaltung eines photovoltaischen Wechselrichters, umfassend: eine Erhaltungseinheit (21), eine Strombestimmungseinheit (22), die mit der Erhaltungseinheit (21) verbunden ist, eine Vergleichseinheit (23), die sowohl mit der Erhaltungseinheit (21) als auch der Strombestimmungseinheit (22) verbunden ist und eine Stopp-Steuereinheit (24), die mit der Vergleichseinheit (23) verbunden ist, wobei
die Erhaltungseinheit (21) konfiguriert ist, um einen Eingangsstrom einer Gleichstromseite des photovoltaischen Wechselrichters zu erhalten, wenn ein mit dem Netz verbundenes Relais geschlossen ist, und einen Echtzeiteingangsstrom der Gleichstromseite des photovoltaischen Wechselrichters zu erhalten, nachdem das mit dem Netz verbundene Relais geschlossen ist;
die Strombestimmungseinheit (22) konfiguriert ist, einen ersten mittleren Eingangsstrom zu bestimmen, wobei der erste mittlere Eingangsstrom bestimmt wird, indem ein Durchschnittswert des Eingangsstroms der Gleichstromseite des photovoltaischen Wechselrichters berechnet wird, der durch Abtasten zu einem ersten Zeitpunkt erhalten wird, wobei zu dem ersten Zeitpunkt die Zeitdauer, über die die Spannung der Gleichstromseite des Photovoltaik-Panels größer als ein vorbestimmter Anfangsspannungsschwellenwert ist, größer als eine zweite vorbestimmte Dauer ist;
die Vergleichseinheit (23) konfiguriert ist, den Eingangsstrom der Gleichstromseite, der von der Strombestimmungseinheit in Echtzeit erhalten wird, wenn der photovoltaische Wechselrichter normal arbeitet, mit dem ersten mittleren Eingangsstrom zu vergleichen, wobei der photovoltaische Wechselrichter normal zu arbeiten beginnt, wenn das mit dem Netz verbundene Relais geschlossen ist und ein Pulsbreitenmodulationsimpuls eingeschaltet ist;
und
die Stopp-Steuereinheit (24) konfiguriert ist, das mit dem Netz verbundene Relais zu trennen, um den mit dem Netz verbundenen Betrieb des fotovoltaischen Wechselrichters zu stoppen, falls die Vergleichseinheit ermittelt, dass der Eingangsstrom der Gleichstromseite, der in Echtzeit erhalten wurde. wenn der photovoltaische Wechselrichter normal arbeitet, kleiner oder gleich dem ersten mittleren Eingangsstrom ist, und eine Dauer eine erste vorbestimmte Dauer erreicht, wobei während der Dauer der Eingangsstrom der Gleichstromseite, der in Echtzeit erhalten wurde nachdem das mit dem Netz verbundene Relais geschlossen ist, kleiner oder gleich dem ersten mittleren Eingangsstrom ist.

6. System nach Anspruch 5, wobei die Erhaltungseinheit (21) konfiguriert ist, den Eingangsstrom der Gleichstromseite des photovoltaischen Wechselrichters unter einer ersten Abtastbedingung zu erhalten, wobei die erste Abtastbedingung eine Bedingung ist, bei der eine Spannung der Gleichstromseite des Photovoltaik-Panels größer als ein voreingestellter Anfangsspannungsschwellenwert ist, der ans Netz angeschlossene Betrieb des photovoltaischen Wechselrichters nicht begonnen hat, der Pulsbreitenmodulationsimpuls blockiert ist und das ans Netz angeschlossene Relais geschlossen ist; oder, Erhalten des Eingangsstroms der Gleichstromseite des photovoltaischen Wechselrichters unter einer zweiten Abtastbedingung, wobei die zweite Abtastbedingung eine Bedingung ist, in welcher der Pulsbreitenmodulationsimpuls blockiert ist, das ans Netz angeschlossene Relais in einem geschlossenen Zustand ist und der photovoltaische Wechselrichter den ans Netz angeschlossenen Betrieb durchführt.

7. System nach Anspruch 6, wobei die Strombestimmungseinheit (22) konfiguriert ist, unter der ersten Abtastbedingung, den Durchschnittswert des Eingangsstroms der Gleichstromseite des photovoltaischen Wechselrichters zu berechnen, der durch Abtasten zu einem ersten Zeitpunkt erhalten wird, zu dem die Zeitdauer, über die die Spannung der Gleichstromseite des Photovoltaik-Panels größer als ein vorbestimmter Anfangsspannungsschwellenwert ist, größer als eine zweite vorbestimmte Dauer ist;
oder die Strombestimmungseinheit (22) konfiguriert ist, unter der zweiten Abtastbedingung, den Durchschnittswert des Eingangsstroms der Gleichstromseite des photovoltaischen Wechselrichters zu berechnen, der durch Abtasten zu einem ersten Zeitpunkt erhalten wird, zu dem die Zeitdauer, über die die Spannung der Gleichstromseite des Photovoltaik-Panels größer als ein vorbestimmter Anfangsspannungsschwellenwert ist, größer als die zweite vorbestimmte Dauer ist.

8. System nach Anspruch 5, ferner umfassend eine Zeitsteuereinheit (25), die mit der Vergleichseinheit (23) verbunden ist,
wobei die Zeitsteuereinheit (25) konfiguriert ist, die Zeitmessung des Eingangsstroms der Gleichstromseite des photovoltaischen Wechselrichters in einem Fall zu stoppen, in dem die Vergleichseinheit (23) bestimmt, dass die Dauer, in welcher der Eingangsstrom der Gleichstromseite des photovoltaischen Wechselrichters kleiner oder gleich dem ersten mittleren Eingangsstrom ist, nicht größer ist als die erste vorbestimmte Dauer, und der Eingangsstrom der Gleichstromseite des photovoltaischen Wechselrichters größer als der erste mittlere Eingangsstrom ist.

9. Photovoltaisches Stromerzeugungssystem, umfassend ein Photovoltaik-Panel (31), eine Steuerung (32), einen photovoltaischen Wechselrichter (33), der sowohl mit dem Photovoltaik-Panel (31) als auch mit der Steuerung (32) verbunden ist, und eine Last (34), die mit dem photovoltaischen Wechselrichter (33) verbunden ist, wobei:
das Photovoltaik-Panel (31) konfiguriert ist, um Solarenergie aufzunehmen, die Solarenergie in Gleichstrom umzuwandeln und den Gleichstrom zum photovoltaischen Wechselrichter (33) zu senden;
wobei die Steuerung (32) konfiguriert ist, um das Starten und Abschalten des photovoltaischen Wechselrichters (33) zu steuern, und ein System zum Steuern der Abschaltung eines photovoltaischen Wechselrichters nach Anspruch 5 umfasst; und
der photovoltaische Wechselrichter (33) konfiguriert ist, den Gleichstrom aus dem Photovoltaik-Panel (31) durch Maximalleistungsverflolgung für den Gebrauch der Last in Wechselstrom umzuwandeln.

10. Fotovoltaisches Stromerzeugungssystem nach Anspruch 9, wobei die Steuerung ferner eine Zeitsteuereinheit (25) umfasst, die mit der Vergleichseinheit (23) verbunden ist, und
wobei die Zeitsteuereinheit (25) konfiguriert ist, die Zeitmessung des Eingangsstroms der Gleichstromseite des photovoltaischen Wechselrichters (33) in einem Fall zu stoppen, in dem die Vergleichseinheit (23) bestimmt, dass die Dauer, für die der Eingangsstrom der Gleichstromseite des photovoltaischen Wechselrichters (33) kleiner oder gleich dem ersten mittleren Eingangsstrom ist, nicht größer als die erste vorbestimmte Dauer ist, und der Eingangsstrom der Gleichstromseite des photovoltaischen Wechselrichters (33) größer als der erste mittlere Eingangsstrom ist.

## Revendications

1. Procédé pour commander l'arrêt d'un onduleur photovoltaïque, comprenant :
l'obtention d'un courant d'entrée d'un côté de courant continu de l'onduleur photovoltaïque lorsqu'un relais connecté au réseau est fermé (S11) ;
la détermination d'un premier courant d'entrée moyen (S12), le premier courant d'entrée moyen étant déterminé par le calcul d'une valeur moyenne du courant d'entrée du côté courant continu de l'onduleur photovoltaïque qui est obtenue par échantillonnage à une première fois, et par la première fois, une période sur laquelle la tension du côté courant continu du panneau photovoltaïque est supérieure à un seuil de démarrage de tension prédéfini, est supérieure à une deuxième durée prédéterminée ;
la comparaison du courant d'entrée du côté courant continu obtenu en temps réel lorsque l'onduleur photovoltaïque fonctionne normalement avec le premier courant d'entrée moyen, dans lequel l'onduleur photovoltaïque commence à fonctionner normalement lorsque le relais connecté au réseau est fermé et une impulsion de modulation de largeur d'impulsion est activée (S13) ; et
la déconnexion du relais connecté au réseau pour arrêter le fonctionnement de l'onduleur photovoltaïque connecté au réseau (S14), s'il est déterminé que la durée atteint une première durée prédéterminée où dans la durée, le courant d'entrée du côté courant continu obtenu en temps réel lorsque l'onduleur photovoltaïque fonctionne normalement est inférieure ou égale au premier courant d'entrée moyen.

2. Procédé selon la revendication 1, dans lequel l'obtention du courant d'entrée du côté de courant continu de l'onduleur photovoltaïque lorsque le relais connecté au réseau est fermé (S11) comprend :
l'obtention du courant d'entrée du côté courant continu de l'onduleur photovoltaïque dans une première condition d'échantillonnage, où la première condition d'échantillonnage est une condition dans laquelle une tension du côté courant continu du panneau photovoltaïque est supérieure à un seuil de démarrage de tension prédéfini, le fonctionnement connecté au réseau de l'onduleur photovoltaïque n'a pas commencé, l'impulsion de modulation de largeur d'impulsion est bloquée, et le relais connecté au réseau est fermé ;
ou, l'obtention du courant d'entrée du côté courant continu de l'onduleur photovoltaïque dans une deuxième condition d'échantillonnage, où la deuxième condition d'échantillonnage est une condition dans laquelle l'impulsion de modulation de largeur d'impulsion est bloquée, le relais connecté au réseau est dans un état fermé et l'onduleur photovoltaïque effectue l'opération connectée au réseau.

3. Procédé selon la revendication 2, dans lequel la détermination du premier courant d'entrée moyen comprend :
dans la première condition d'échantillonnage, l'acquisition du courant d'entrée du côté courant continu de l'onduleur photovoltaïque, et le calcul de la valeur moyenne du courant d'entrée du côté courant continu de l'onduleur photovoltaïque qui est obtenu par échantillonnage à une première fois, par la première fois la période sur laquelle la tension du côté courant continu du panneau photovoltaïque est supérieure au seuil de démarrage de tension prédéterminé est supérieure à une deuxième durée prédéterminée ;
ou, dans la deuxième condition d'échantillonnage, l'acquisition du courant d'entrée du côté courant continu de l'onduleur photovoltaïque, et le calcul de la valeur moyenne du courant d'entrée du côté courant continu de l'onduleur photovoltaïque qui est obtenu par échantillonnage à une première fois, par la première fois la période sur laquelle la tension du côté courant continu du panneau photovoltaïque est supérieure au seuil de démarrage de tension prédéterminé est supérieure à une deuxième durée prédéterminée.

4. Procédé selon la revendication 1, comprenant en outre:
un arrêt de temporisation du courant d'entrée du côté courant continu de l'onduleur photovoltaïque, dans le cas où la durée dans laquelle le courant d'entrée du côté courant continu de l'onduleur photovoltaïque est inférieur ou égal au premier courant d'entrée moyen n'est pas supérieure à la première durée prédéterminée, et il est déterminé que le courant d'entrée du côté courant continu de l'onduleur photovoltaïque est supérieur au premier courant d'entrée moyen.

5. Système de commande d'arrêt d'un onduleur photovoltaïque comprenant :
une unité d'obtention (21), une unité de détermination de courant (22) connectée à l'unité d'obtention (21), une unité de comparaison (23) connectée à la fois à l'unité d'obtention (21) et à l'unité de détermination de courant (22), et une unité de commande d'arrêt (24) connectée à l'unité de comparaison (23), dans lequel
l'unité d'obtention (21) est configurée pour obtenir un courant d'entrée d'un côté à courant continu de l'onduleur photovoltaïque lorsqu'un relais connecté au réseau est fermé, et obtenir un courant d'entrée en temps réel du côté courant continu de l'onduleur photovoltaïque après le relais connecté au réseau est fermé ;
l'unité de détermination de courant (22) est configurée pour déterminer un premier courant d'entrée moyen, le premier courant d'entrée moyen étant déterminé par le calcul d'une valeur moyenne du courant d'entrée du côté courant continu de l'onduleur photovoltaïque qui est obtenue par échantillonnage à une première fois, et par la première fois, une période sur laquelle la tension du côté courant continu du panneau photovoltaïque est supérieure à un seuil de démarrage de tension prédéfini, est supérieure à une deuxième durée prédéterminée ;
l'unité de comparaison (23) est configurée pour comparer le courant d'entrée du côté courant continu obtenu en temps réel par l'unité de détermination de courant lorsque l'onduleur photovoltaïque fonctionne normalement avec le premier courant d'entrée moyen, où l'onduleur photovoltaïque commence à fonctionner normalement lorsque le relais connecté au réseau est fermé et une impulsion de modulation de largeur d'impulsion est activée ; et
et l'unité de commande d'arrêt (24) est configurer pour déconnecter le relais connecté au réseau pour arrêter le fonctionnement de l'onduleur photovoltaïque connecté au réseau, si l'unité de comparaison détermine que le courant d'entrée du côté courant continu obtenu en temps réel lorsque l'onduleur photovoltaïque fonctionne normalement est inférieur ou égal au premier courant d'entrée moyen, et une durée atteint une première durée prédéterminée, où dans la durée, le courant d'entrée du côté courant continu obtenu en temps réel après la fermeture du relais connecté au réseau est inférieur ou égal au premier courant d'entrée moyen.

6. Système selon la revendication 5, dans lequel l'unité d'obtention (21) est configurée pour obtenir le courant d'entrée du côté courant continu de l'inverseur photovoltaïque dans une première condition d'échantillonnage, dans lequel la première condition d'échantillonnage est une condition dans laquelle une tension du côté courant continu du panneau photovoltaïque est supérieure à un seuil de démarrage de tension prédéfini, le fonctionnement connecté au réseau de l'onduleur photovoltaïque n'a pas commencé, l'impulsion de modulation de largeur d'impulsion est bloquée, et le relais connecté au réseau est fermé ;
ou, l'obtention du courant d'entrée du côté courant continu de l'onduleur photovoltaïque dans une deuxième condition d'échantillonnage, où la deuxième condition d'échantillonnage est une condition dans laquelle l'impulsion de modulation de largeur d'impulsion est bloquée, le relais connecté au réseau est dans un état fermé et l'onduleur photovoltaïque effectue l'opération connectée au réseau.

7. Système selon la revendication 6, dans lequel l'unité de détermination de courant (22) est configurée pour, dans la première condition d'échantillonnage, calculer la valeur moyenne du courant d'entrée du côté de courant continu de l'onduleur photovoltaïque qui est obtenue par échantillonnage à une première fois, par la première fois la période sur laquelle la tension du côté du courant continu du panneau photovoltaïque est supérieure au seuil de démarrage de tension prédéfini, est supérieure à une deuxième durée prédéterminée ;
ou, l'unité de détermination du courant (22) est configurée pour, dans la deuxième condition d'échantillonnage, calculer la valeur moyenne du courant d'entrée du côté courant continu de l'onduleur photovoltaïque qui est obtenu par échantillonnage à une première fois, par la première fois la période sur laquelle la tension du côté courant continu du panneau photovoltaïque est supérieure au seuil de démarrage de tension prédéterminé est supérieure à la deuxième durée prédéterminée.

8. Système selon la revendication 5, comprenant en outre une unité de commande de temporisation (25) connectée à l'unité de comparaison (23), dans lequel l'unité de commande de temporisation (25) est configurée pour arrêter la temporisation du courant d'entrée du côté courant continu de l'onduleur photovoltaïque, dans le cas où l'unité de comparaison (23) détermine que la durée dans laquelle le courant d'entrée du côté courant continu de l'onduleur photovoltaïque est inférieur ou égal au premier courant d'entrée moyen n'est pas supérieure à la première durée prédéterminée, et le courant d'entrée du côté courant continu de l'onduleur photovoltaïque est supérieur au premier courant d'entrée moyen.

9. Système de génération d'énergie photovoltaïque, comprenant un panneau photovoltaïque (31), un contrôleur (32), un onduleur photovoltaïque (33) connecté à la fois au panneau photovoltaïque (31) et au contrôleur (32), et une charge (34) connectée à l'onduleur photovoltaïque (33), dans lequel :
le panneau photovoltaïque (31) est configuré pour absorber l'énergie solaire, convertir l'énergie solaire en courant continu, et envoyer le courant continu à l'onduleur photovoltaïque (33) ;
le contrôleur (32) est configuré pour commander le démarrage et l'arrêt de l'onduleur photovoltaïque (33) et comprend un système de commande d'arrêt d'un onduleur photovoltaïque selon la revendication 5 ; et
l'onduleur photovoltaïque (33) est configuré pour convertir le courant continu provenant du panneau photovoltaïque (31) en courant alternatif pour l'utilisation de la charge grâce à un suivi de puissance maximum.

10. Système de génération d'énergie photovoltaïque selon la revendication 9, dans lequel le contrôleur comprend en outre une unité de commande de temporisation (25) connectée à l'unité de comparaison (23), et
dans lequel l'unité de commande de temporisation (25) est configurée pour arrêter la temporisation du courant d'entrée du côté courant continu de l'onduleur photovoltaïque (33), dans le cas où l'unité de comparaison (23) détermine que la durée dans laquelle le courant d'entrée du côté courant continu de l'onduleur photovoltaïque (33) est inférieur ou égal au premier courant d'entrée moyen n'est pas supérieure à la première durée prédéterminée, et le courant d'entrée du côté courant continu de l'onduleur photovoltaïque (33) est supérieur au premier courant d'entrée moyen.
